(19) Europäisches Patentamt
European Patent Office
Office européen des brevets

(11) **EP 4 521 317 A1**

(12) **EUROPEAN PATENT APPLICATION**

(43) Date of publication:
**12.03.2025 Bulletin 2025/11**

(21) Application number: **24188860.1**

(22) Date of filing: **16.07.2024**

(51) International Patent Classification (IPC):
**G06Q 10/047** (2023.01)      **G01C 21/34** (2006.01)

(52) Cooperative Patent Classification (CPC):
**G01C 21/343; G06Q 10/047; G01C 21/3453**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **06.09.2023 JP 2023144887**

(71) Applicant: **FUJITSU LIMITED**
**Kawasaki-shi, Kanagawa 211-8588 (JP)**

(72) Inventor: **KIMURA, Keiji**
**Kawasaki-shi, Kanagawa, 211-8588 (JP)**

(74) Representative: **Hoffmann Eitle**
**Patent- und Rechtsanwälte PartmbB**
**Arabellastraße 30**
**81925 München (DE)**

(54) **INFORMATION PROCESSING PROGRAM, INFORMATION PROCESSING METHOD, AND INFORMATION PROCESSING APPARATUS**

(57) A program for causing a computer to execute: obtaining first route information defining at least a first route traveling through nodes, among the first route, a time limit of traveling to the nodes, and a type of moving object; generating second route information based on the first route information and setting a route information group including the first and second route information, the second route information being different from any pieces of the first route information and defining at least a second route traveling through the nodes, among the second route, a time limit of traveling to at least one of the nodes, and a type of moving object; and creating a plan defining a route on which each moving object travels to the nodes, based on the route information group such that the first route information is used preferentially over the second route information.

EP 4 521 317 A1

# EP 4 521 317 A1

**Description**

FIELD

The embodiment discussed herein is related to an information processing program, an information processing method, and an information processing apparatus.

BACKGROUND

In the logistics industry, a driver of a delivery vehicle has executed delivery work on a daily basis in the past according to route information that defines which type of delivery vehicle is to visit which one or more sites in which order at which timing and which item is to be collected or delivered at each site. For example, there is a case where the driver of the delivery vehicle desires to perform the delivery work according to route information fixed throughout a certain period, instead of route information varying from day to day.

As a related art, for example, there is a technique in which an optimum ship distribution plan is formulated by performing comparison of a fuel consumption or a CO2 discharge amount in the case where a ship navigates between a location where the ship is present and a departure port that is a site of transport request. For example, there is a technique in which a candidate route for a shuttle service is derived based on one or more of selected historic non-shuttle service requests. For example, there is a technique in which a route of an equipment from a desired departure point to a desired end destination is displayed. For example, there is a technique in which at least a portion of a route from a first location to a second location is provided to a delivery mechanism.

Japanese Laid-open Patent Publication No. 2020-024751, Japanese National Publication of International Patent Application No. 2020-522064, and U.S. Patent Application Publication Nos. 2016/0335593 and 2014/0358703 are disclosed as related art.

SUMMARY

TECHNICAL PROBLEM

However, the related art has such a problem that the related art leads to an increase in a cost of the delivery work. The cost of the delivery work includes, for example, a financial cost, a temporal cost, an equipment cost, a human cost, and the like. For example, there is such a problem that it is difficult to efficiently collect or deliver items according to changes in a daily item collection amount, a daily item delivery amount, or the like by using only the fixed route information, and the related art tends to lead to an increase in the cost of the delivery work.

According to one aspect, an object of the present disclosure is to reduce the cost.

SOLUTION TO PROBLEM

According to an aspect of the embodiments, there is provided an information processing program including instructions which, when executed by a computer, cause the computer to execute processing including: obtaining one or more pieces of first route information, each of the one or more pieces of first route information including, among parameters, at least a first route being a route traveling through two or more of a plurality of nodes, the parameters including: the first route, a time limit of traveling to at least one of the two or more nodes, and a type of moving object that travels to the two or more nodes; generating second route information based on the one or more pieces of first route information and thereby setting a route information group including the second route information and at least one of the one or more pieces of first route information, the second route information being different from any of the one or more pieces of first route information and defining at least a second route traveling through two or more of the plurality of nodes, among the second route, a time limit of traveling to at least one of the two or more nodes, and a type of moving object that travels to the two or more nodes; and creating a plan defining a route on which each of a plurality of moving objects travels to two or more of the plurality of nodes, based on the route information group such that the first route information is used preferentially over the second route information.

ADVANTAGEOUS EFFECTS OF INVENTION

According to one aspect, the cost may be reduced.

# EP 4 521 317 A1

BRIEF DESCRIPTION OF DRAWINGS

FIG. 1 is an explanatory diagram illustrating one example of an information processing method according to an embodiment;

FIG. 2 is an explanatory diagram illustrating an example of an information processing system;

FIG. 3 is a block diagram illustrating a hardware configuration example of an information processing apparatus;

FIG. 4 is a block diagram illustrating an example of a functional configuration of the information processing apparatus;

FIG. 5 is a block diagram illustrating a specific example of the functional configuration of the information processing apparatus;

FIG. 6 is an explanatory diagram (part 1) illustrating an example of an operation of the information processing apparatus;

FIG. 7 is an explanatory diagram (part 2) illustrating the example of the operation of the information processing apparatus;

FIG. 8 is an explanatory diagram (part 1) illustrating an example of effects;

FIG. 9 is an explanatory diagram (part 2) illustrating the example of the effects;

FIG. 10 is a flowchart illustrating an example of an overall processing procedure; and

FIG. 11 is a flowchart illustrating an example of an update processing procedure.

DESCRIPTION OF EMBODIMENTS

Hereinafter, an embodiment of an information processing program, an information processing method, and an information processing apparatus according to the present disclosure will be explained in detail with reference to the drawings.

(Example of Information Processing Method According to Embodiment)

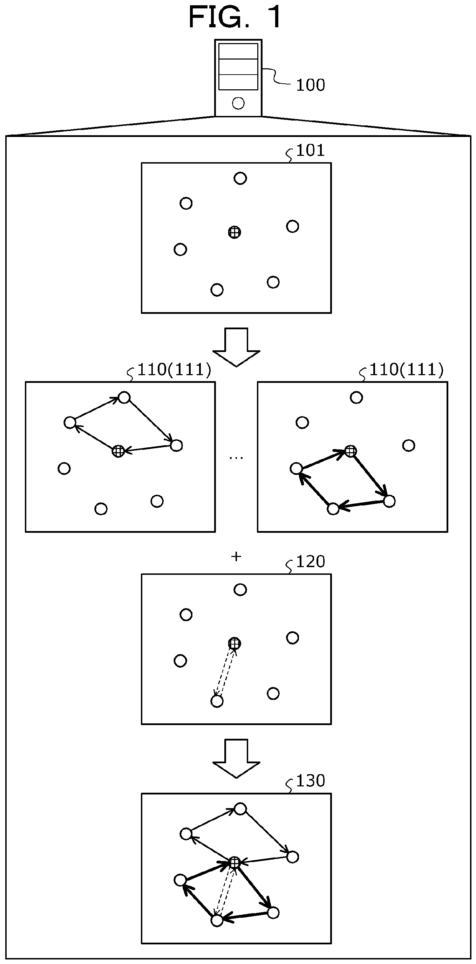

FIG. 1 is an explanatory diagram illustrating one example of the information processing method according to the embodiment. An information processing apparatus 100 is a computer for reducing a cost of delivery work. For example, the information processing apparatus 100 is a server, a personal computer (PC), or the like.

The delivery work is work related to the field of logistics and is work of collecting or delivering one or more items to each of one or more of multiple sites via a delivery vehicle. In the related art, a driver drives the delivery vehicle and performs the delivery work daily according to route information that defines which type of delivery vehicle is to visit which one or more of the multiple sites in which order at which timing and which item is to be collected or delivered at each site.

For example, the multiple sites include sites that are fixed throughout a certain period and that are targets of daily item delivery or collection. The fixed sites include, for example, a convenience store, a supermarket, a warehouse, and the like. The multiple sites include, for example, a temporary site that vary from day to day and that is a target of item delivery or collection. The temporary site is, for example, a residential house or the like. The multiple sites may vary from day to day.

For example, there is a case where the driver desires to execute the delivery work according to route information fixed throughout a certain period, instead of route information varying from day to day. For example, there is a case where the driver desires to reduce a physical or mental work burden by executing the delivery work while driving the same type of delivery vehicle on the same route every day.

However, in the related art, there is such a problem that this leads to an increase in the cost of the delivery work. The cost of the delivery work includes, for example, a financial cost, a temporal cost, an equipment cost, a human cost, and the like.

For example, a case is conceivable in which each of multiple drivers drives a delivery vehicle and performs the delivery work according to only the route information fixed to be the same every day. In this case, there is such a problem that it is difficult to efficiently collect or deliver items according to changes in a daily item collection amount, a daily item delivery amount, or the like and the case is likely to lead to an increase in the cost of the delivery work.

For example, when the collection amount or the delivery amount of items on a certain day is relatively small, a case is conceivable in which a situation where one of the delivery vehicles travels with no items loaded between two of the sites occurs and this leads to a decrease in delivery efficiency. For example, when the collection amount or the delivery amount of items on a certain day is relatively small, a case is conceivable in which items of an amount loadable all at once on one delivery vehicle are loaded on two delivery vehicles in a distributed manner and this leads to a decrease in delivery efficiency. For example, when the collection amount or the delivery amount of items on a certain day is relatively large, a case is conceivable in which the delivery work is not appropriately completed if the delivery work is performed according to only the route information fixed to be the same every day.

For example, when a temporary site unique to a certain day is present as a target of collecting or delivering an item, a case is conceivable in which the delivery work is not appropriately completed if the delivery work is performed according to only the route information fixed to be the same every day. For example, when temporary route information different from the route information fixed to be same every day is generated to collect or deliver an item from or to the temporary site, there is such a problem that it is difficult to appropriately generate the temporary route information while suppressing an increase in the cost of the delivery work.

Accordingly, in the present embodiment, an information processing method capable of reducing the cost will be explained. For example, according to the present embodiment, it is possible to reduce the cost of the delivery work while using the route information fixed to be the same every day.

In FIG. 1, the information processing apparatus 100 stores a graph 101 that includes multiple nodes representing different sites, respectively, and in which the nodes are linked to one another by edges. Each edge indicates that a moving object is movable between sites represented by different nodes. The moving object is, for example, the delivery vehicle. The delivery vehicle is, for example, a large truck, a midsize truck, a small truck, or the like. The delivery vehicle may be, for example, a passenger vehicle, a motorcycle, or the like.

The multiple nodes include a node representing a site corresponding to a logistics center called depot. The logistics center may be, for example, a departure point or an arrival point of the moving object. The multiple nodes include nodes representing sites corresponding to travel destinations that are targets of collecting or delivering items, in addition to the logistics center. For example, the travel destination may be a relay point of the moving object.

The information processing apparatus 100 obtains a processing request demanding creation of a plan defining a route on which each of multiple moving objects travels to two or more of the multiple nodes. For example, the information processing apparatus 100 receives a signal indicating the processing request via a communication network, such as the Internet. The plan is information that enables execution of a delivery operation. The plan includes multiple pieces of route information to be used in execution of the delivery operation.

The delivery operation is an operation in which each of the multiple moving objects travels to two or more of the multiple nodes to collect or deliver items. The delivery operation includes the delivery work of each driver. For example, the route information defines at least a route traveling through two or more of the multiple nodes, among the route, a time limit of traveling to at least one of the two or more nodes, and a type of moving object that travels to the two or more nodes.

For example, the information processing apparatus 100 obtains the processing request by receiving the processing request from another computer. For example, the information processing apparatus 100 may obtain the processing request by receiving an input of the processing request based on an operation input by a user. The information processing apparatus 100 creates a current plan 130 as described below in response to the processing request. The current plan 130 is, for example, a plan that enables execution of the delivery operation of the current day.

(1-1) The information processing apparatus 100 obtains one or more pieces of first route information 110. For example, the first route information 110 (i.e., each piece of first route information of the one or more pieces of first route information 110) defines at least a first route being a route traveling through two or more of the multiple nodes. In addition, the first route information 110 may include a time limit of traveling to at least one of the two or more nodes, and a type of moving object that travels to the two or more nodes. That is, the first route information 110 includes at least the first route among such parameters as the first route, the time limit, and the type of moving object. The time limit is, for example, a deadline of the moving object arriving at a node, a deadline of the moving object departing from a node, or the like. The type of moving object is, for example, one of a large truck, a midsize truck, and a small truck. The first route information 110 is, for example, fixed route information preferable for the driver. The first route information 110 is, for example, route information that has been used in the past plan. For example, the first route information 110 specifies a route on which the moving object travels in the delivery work, indicates a temporal limit and a condition for the traveling moving object in the case where the moving object travels on the route, and defines how the driver is to execute the delivery work.

(1-2) The information processing apparatus 100 generates second route information 120 based on the obtained one or more pieces of first route information 110, and thereby sets a route information group including the generated second route information 120 and at least one of the obtained one or more pieces of first route information 110. The second route information 120 is route information different from any of the one or more pieces of first route information 110. For example, the second route information 120 defines at least a second route traveling through two or more of the multiple nodes. In addition, the second route information 120 may include a time limit of traveling to at least one of the two or more nodes, and a type of moving object that travels to the two or more nodes. That is, the second route information 120 includes at least the second route among such parameters as the second route, the time limit, and the type of moving object.

For example, the second route information 120 may be route information that defines at least the second route same as the first route defined by one of the one or more pieces of first route information 110 and that is different in the type of moving object from the one or more pieces of first route information 110. For example, the second route defined in the second route information 120 may be a route different from any route of the one or more pieces of first route information 110. For example, the second information may be different in the parameters such as the type of moving object from the one or more pieces of first route information 110. For example, the second route information 120 specifies a route on which the moving object travels in the delivery work, indicates a temporal limit and a condition for the traveling moving object in the case where the moving object travels on the route, and defines how the driver is to execute the delivery work.

(1-3) The information processing apparatus 100 creates the current plan 130 based on the set route information group such that the first route information 110 is used preferentially over the second route information 120. The current plan 130 defines the route on which each of the plurality of moving objects travels to two or more of the multiple nodes.

For example, the information processing apparatus 100 sets a weight for the cost in the case where the second route information 120 is used to a value larger than a weight for the cost in the case where the first route information 110 is used, and then sets an objective function for calculating a weighted sum of the cost. For example, the information processing apparatus 100 sets a route selection problem in which route information to be used in the current plan 130 is selected from the route information group such that the value of the set objective function is minimized. For example, the information processing apparatus 100 creates the current plan 130 by solving the set route selection problem.

The information processing apparatus 100 may thereby create the current plan 130, and enable execution of the current delivery operation. In this case, the information processing apparatus 100 may create the current plan 130 such that the first route information 110 is used preferentially over the second route information 120. The information processing apparatus 100 may increase a probability that the driver executes the delivery work according to the first route information 110 instead of the second route information 120. The information processing apparatus 100 may thus reduce the work burden on the driver. The information processing apparatus 100 may create the current plan 130 such that the second route information 120 is used in addition to the first route information 110 in consideration of the weighted sum of the costs. The information processing apparatus 100 may thus reduce the costs of the delivery operation.

Although the case where the function as the information processing apparatus 100 is implemented by a single computer has been explained, the embodiment is not limited to this case. For example, there may be a case where the function as the information processing apparatus 100 is implemented by cooperation of multiple computers. For example, there may be a case where the function as the information processing apparatus 100 is implemented on a cloud.

(Example of Information Processing System 200)

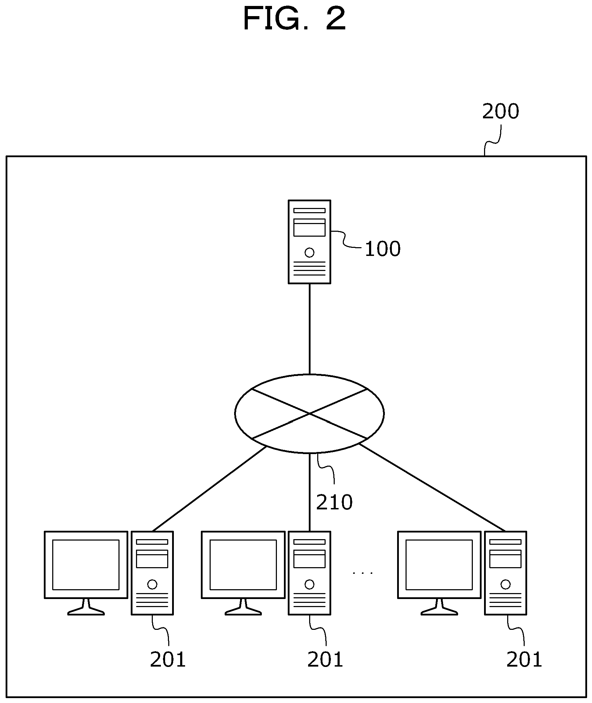

Next, an example of an information processing system 200 to which the information processing apparatus 100 illustrated in FIG. 1 is applied will be explained by using FIG. 2.

FIG. 2 is an explanatory diagram illustrating an example of the information processing system 200. In FIG. 2, the information processing system 200 includes the information processing apparatus 100 and one or more client apparatuses 201.

In the information processing system 200, the information processing apparatus 100 and each client apparatus 201 are coupled to each other via a wired or wireless network 210. The network 210 is, for example, a local area network (LAN), a wide area network (WAN), the Internet, or the like.

The information processing apparatus 100 is a computer for creating the plan that enables execution of the delivery operation. The information processing apparatus 100 stores a graph that includes multiple nodes representing different sites, respectively, and in which the nodes are linked by edges. For example, the information processing apparatus 100 receives the graph from the client apparatus 201 and stores the graph. For example, the information processing apparatus 100 may store the graph by receiving an input of the graph based on an operation input by a user.

The information processing apparatus 100 obtains a processing request demanding creation of a plan defining a route on which each of multiple moving objects travels to two or more of the multiple nodes. The plan is, for example, information that enables execution of the delivery operation. For example, the information processing apparatus 100 obtains the processing request by receiving the processing request from the client apparatus 201. For example, the information processing apparatus 100 may obtain the processing request by receiving an input of the processing request based on an operation input by a user.

The information processing apparatus 100 obtains one or more pieces of fixed route information. The fixed route information (i.e., each piece of fixed route information of the one or more pieces of fixed route information) corresponds to an example of the first route information described above. For example, the fixed route information defines at least a fixed route traveling through two or more of the multiple nodes. In addition, the fixed route information may include a time limit of traveling to at least one of the two or more nodes, and a type of moving object that travels to the two or more nodes. That is, the fixed route information includes at least the fixed route among such parameters as the fixed route, the time limit, and the type of moving object. The time limit is, for example, a deadline of the moving object arriving at a node, a deadline of the moving object departing from a node, or the like. The type of moving object is, for example, one of a large truck, a midsize truck, and a small truck. For example, the fixed route is a traveling route on which the driver has experienced traveling by driving a truck in the past. The fixed route is thus, for example, a traveling route in which a physical or mental work burden on the driver in traveling is expected to be small. The fixed route may be a desired traveling route specified by the driver. The fixed route information is, for example, route information that defines a fixed route preferable for the driver. The fixed route information is, for example, route information that has been used in the past plan. For example, the fixed route information specifies a route on which the moving object travels in the delivery work, indicates a temporal limit and a condition for the traveling moving object in the case where the moving object travels on the route, and defines how the driver is to execute the delivery work. For example, the information processing apparatus 100 obtains the one or more pieces of fixed route information by receiving the one or more pieces of fixed route information from the client apparatus 201. For example, the information processing apparatus 100 may obtain the one or more pieces of fixed route information by receiving an input of the one or more pieces of fixed route information based on an operation input by a user.

The information processing apparatus 100 generates derived route information or temporary route information based on the obtained one or more pieces of fixed route information, and thereby sets a route information group including the derived route information or the temporary route information and at least one of the obtained one or more pieces of fixed route information. The derived route information is route information different from any of the one or more pieces of fixed route information. For example, the derived route information defines at least a derived route traveling through two or more of the multiple nodes, among such parameters as the derived route, a time limit of traveling to at least one of the two or more nodes, and a type of moving object that travels to the two or more nodes. For example, the derived route information may be route information that defines at least the derived route same as the fixed route defined by one of the one or more pieces of fixed route information and that is different in the type of moving object from the one or more pieces of fixed route information. For example, the derived route defined in the derived route information may be a route different from any route of the one or more fixed route information. For example, the derived route information specifies a route that the moving object travels in the delivery work, indicates a temporal limit and a condition for the traveling moving object in the case where the moving object travels on the route, and defines how the driver is to execute the delivery work.

The temporary route information is route information different from any of the one or more pieces of fixed route information. For example, the temporary route information defines at least a temporary route traveling through two or more of the multiple nodes, among such parameters as the temporary route, a time limit of traveling to at least one of the two or more nodes, and a type of moving object that travels to the two or more nodes. The temporary route information is, for example, route information that defines at least the temporary route different from any of the fixed routes defined, respectively, by the one or more pieces of fixed route information and that is different from any of the one or more pieces of fixed route information. For example, the temporary route information specifies a route on which the moving object travels in the delivery work, indicates a temporal limit and a condition for the traveling moving object in the case where the moving object travels on the route, and defines how the driver is to execute the delivery work.

For example, the information processing apparatus 100 prepares an empty route information group. The information processing apparatus 100 obtains multiple pieces of initial route information, and registers the initial route information in the route information group. For example, the initial route information defines at least an initial route traveling through two or more of the multiple nodes, among the initial route, a time limit of traveling to at least one of the two or more nodes, and a type of moving object that travels to the two or more nodes. For example, the initial route information defines an initial route that starts from the node representing the logistics center, passes through one of the nodes representing the relay points, and arrives at the node representing the logistics center. For example, the initial route information specifies a route on which the moving object travels in the delivery work, indicates a temporal limit and a condition for the traveling moving object in the case where the moving object travels on the route, and defines how the driver is to execute the delivery work. For example, the information processing apparatus 100 obtains the initial route information corresponding to each of the sites other than the logistics center among the multiple sites. For example, the information processing apparatus 100 obtains the multiple pieces of initial route information by generating pieces of initial route information corresponding, respectively, to the sites other than the logistics center among the multiple sites based on the graph.

For example, the information processing apparatus 100 sets a final route information group by repeatedly executing a series of processes of setting a reduced cost minimization problem for an optimal solution to a dual problem of a relaxation problem of the route selection problem for the route information group and updating the route information group. For example, the final route information group preferably includes the derived route information or the temporary route information and at least one of the one or more pieces of fixed route information.

The series of processes includes a process of setting a reduced cost optimization problem for an optimal solution to a dual problem of a relaxation problem of a route selection problem for a current route information group. For example, the series of processes includes a process in which, when the fixed route information with a negative reduced cost is present among the one or more pieces of fixed route information based on the set reduced cost minimization problem, the current route information group is updated by adding this fixed route information to the current route information group.

For example, the series of processes includes a process in which, when the fixed route information with a negative reduced cost is absent based on the set reduced cost minimization problem, the current route information group is updated by generating the derived route information with a negative reduced cost and adding the derived route information to the current route information group. For example, the series of processes includes a process in which, when the derived route information with a negative reduced cost is absent based on the set reduced cost minimization problem, the current route information group is updated by generating the temporary route information with a negative reduced cost and adding the temporary route information to the current route information group.

The information processing apparatus 100 creates the current plan based on the set final route information group such that the fixed route information is used preferentially over the derived route information and the temporary route information. The information processing apparatus 100 creates the current plan based on the set final route information group such that the fixed route information is used preferentially over the derived route information and the derived route information is used preferentially over the temporary route information.

For example, the information processing apparatus 100 sets a weight for the cost in the case where the derived route information is used, to a value larger than a weight for the cost in the case where the fixed route information is used. For example, the information processing apparatus 100 sets a weight for the cost in the case where the temporary route information is used, to a value larger than the weight for the cost in the case where the derived route information is used. For example, the information processing apparatus 100 sets an objective function for calculating a weighted sum of the costs.

For example, the information processing apparatus 100 sets a route selection problem in which the route information to be used in the current plan is selected from the final route information group such that a value of the set objective function is minimized. For example, the information processing apparatus 100 creates the current plan by solving the set route selection problem. The information processing apparatus 100 transmits the created current plan to the client apparatus 201. For example, the information processing apparatus 100 is a server, a PC, or the like.

The client apparatus 201 is a computer for supporting the delivery operation. The client apparatus 201 generates the graph based on an operation input by a user, and transmits the graph to the information processing apparatus 100. For example, the client apparatus 201 generates the one or more pieces of fixed route information based on an operation input by a user, and transmits the one or more pieces of fixed route information to the information processing apparatus 100.

For example, the client apparatus 201 generates the processing request based on an operation input by the user, and transmits the processing request to the information processing apparatus 100. The client apparatus 201 receives the current plan from the information processing apparatus 100. The client apparatus 201 outputs the current plan such that the user may refer to the current plan. For example, the client apparatus 201 is a PC, a tablet terminal, a smartphone, or the like.

Although the case where the information processing apparatus 100 is a computer different from the client apparatus 201 has been explained, the embodiment is not limited to this case. For example, there may be a case where the information processing apparatus 100 has the function as the client apparatus 201 and operates also as the client apparatus 201.

(Hardware Configuration Example of Information Processing Apparatus 100)

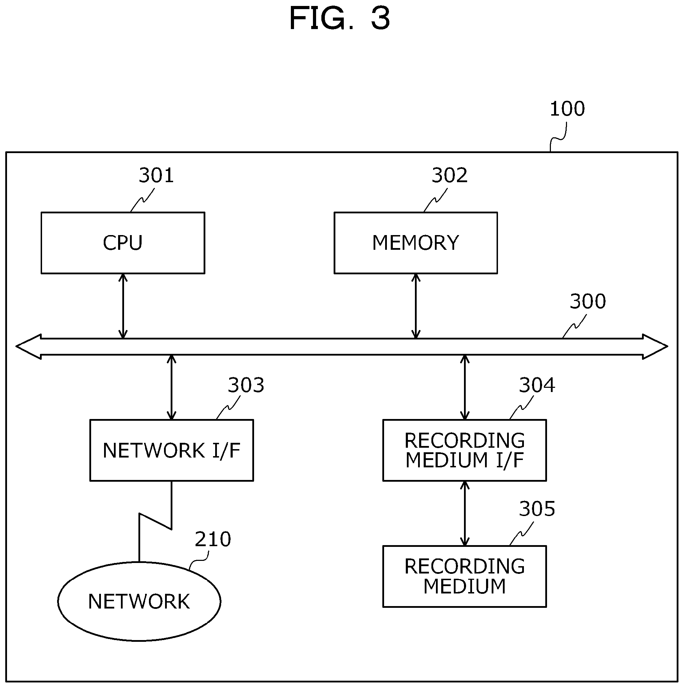

Next, a hardware configuration example of the information processing apparatus 100 will be explained by using FIG. 3.

FIG. 3 is a block diagram illustrating the hardware configuration example of the information processing apparatus 100. In FIG. 3, the information processing apparatus 100 includes a central processing unit (CPU) 301, a memory 302, a network interface (I/F) 303, a recording medium I/F 304, and a recording medium 305. The components are coupled to one another by a bus 300.

The CPU 301 is responsible for control of the entire information processing apparatus 100. For example, the memory 302 includes a read-only memory (ROM), a random-access memory (RAM), a flash ROM, and the like. For example, the flash ROM and the ROM store various programs, and the RAM is used as a work area of the CPU 301. The programs stored in the memory 302 are loaded by the CPU 301, and causes the CPU 301 to execute coded processing.

The network I/F 303 is coupled to the network 210 through a communication line, and is coupled to another computer via the network 210. The network I/F 303 serves as an interface between the network 210 and the inside of the information processing apparatus 100, and controls input and output of data from and to another computer. For example, the network I/F 303 is a modem, a LAN adapter, or the like.

The recording medium I/F 304 controls reading and writing of data from and to the recording medium 305 according to the control of the CPU 301. For example, the recording medium I/F 304 is a disk drive, a solid-state drive (SSD), a Universal Serial Bus (USB) port, or the like. The recording medium 305 is a non-volatile memory that stores data written under control of the recording medium I/F 304. For example, the recording medium 305 is a disk, a semiconductor memory, a USB memory, or the like. The recording medium 305 may be removably attached to the information processing apparatus 100.

In addition to the components described above, the information processing apparatus 100 may include, for example, a keyboard, a mouse, a display, a printer, a scanner, a microphone, a speaker, and the like. The information processing apparatus 100 may include multiple recording medium I/Fs 304 and multiple recording media 305. The information processing apparatus 100 may include no recording medium I/F 304 or recording medium 305.

(Hardware Configuration Example of Client Apparatus 201)

Since a hardware configuration example of the client apparatus 201 is, for example, similar to the hardware configuration example of the information processing apparatus 100 illustrated in FIG. 3, explanation thereof will be omitted.

(Example of Functional Configuration of Information Processing Apparatus 100)

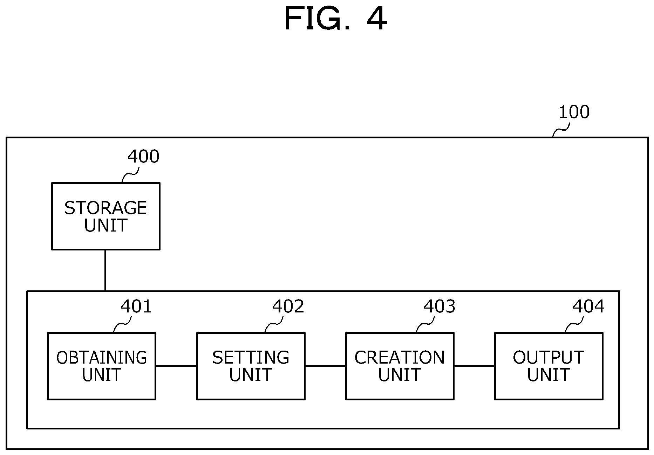

Next, an example of a functional configuration of the information processing apparatus 100 will be explained by using FIG. 4.

FIG. 4 is a block diagram illustrating an example of a functional configuration of the information processing apparatus 100. The information processing apparatus 100 includes a storage unit 400, an obtaining unit 401, a setting unit 402, a creation unit 403, and an output unit 404.

For example, the storage unit 400 is implemented by a storage area of the memory 302, the recording medium 305, or the like illustrated in FIG. 3. Although the case where the storage unit 400 is included in the information processing apparatus 100 is explained below, the embodiment is not limited to this case. For example, there may be a case where the storage unit 400 is included in an apparatus different from the information processing apparatus 100 and the information processing apparatus 100 may refer to the storage contents of the storage unit 400.

The obtaining unit 401 to the output unit 404 function as an example of a control unit. For example, functions of the obtaining unit 401 to the output unit 404 are implemented by, for example, causing the CPU 301 to execute programs stored in the storage area of the memory 302, the recording medium 305, or the like illustrated in FIG. 3 or by using the network I/F 303. For example, a processing result of each functional unit is stored in the storage area of the memory 302, the recording medium 305, or the like illustrated in FIG. 3.

The storage unit 400 stores various types of information to be referred to or updated in processing of each functional unit. For example, the storage unit 400 stores the graph that includes the multiple nodes representing different sites, respectively, and in which the nodes are linked to one another by the edges. The graph indicates a region where the delivery operation is to be executed. The delivery operation includes the delivery work of the drivers in which each of the multiple moving objects travels to two or more of the multiple nodes to collect or deliver items.

Each edge indicates that a moving object is movable between sites represented by different nodes. The moving object is, for example, the delivery vehicle. The delivery vehicle is, for example, a large truck, a midsize truck, a small truck, or the like. The delivery vehicle may be, for example, a passenger vehicle, a motorcycle, or the like. The multiple nodes include a node representing a site corresponding to a logistics center called depot. The logistics center may be, for example, a departure point or an arrival point of the moving object. The multiple nodes include nodes representing sites corresponding to travel destinations that are targets of collecting or delivering items, in addition to the logistics center. For example, the travel destination may be a relay point of the moving object. For example, the graph is obtained by the obtaining unit 401.

The storage unit 400 stores, for example, the route information group. The route information group includes, for example, one or more pieces of route information. The route information may be used when the delivery operation is executed. For example, the route information defines at least a route traveling through two or more of the multiple nodes, among the route, a time limit of traveling to at least one of the two or more nodes, and a type of moving object that travels to the two or more nodes. The time limit is, for example, a limit of a time point at which the moving object arrives at a node, a limit of a time point at which the moving object departs from a node, or the like. The limit of the time point at which the moving object arrives at the node indicates, for example, time before which the moving object is to arrive at the node or time after which the moving object is to arrive at the node. The limit of the time point at which the moving object departs from the node indicates, for example, time before which the moving object is to depart from the node or time after which the moving object is to depart from the node. The type of moving object is, for example, one of a large truck, a midsize truck, and a small truck. The route information may be included in, for example, the plan that enables execution of the delivery operation. The plan defines, for example, the route on which each of the multiple moving objects travels to two or more of the multiple nodes, by using one or more pieces of route information. For example, the route information group is updated by the obtaining unit 401, the setting unit 402, or the creation unit 403.

The storage unit 400 stores, for example, one or more pieces of first route information. For example, the first route information defines at least the first route traveling through two or more of the multiple nodes, among the first route, the time limit of traveling to at least one of the two or more nodes, and the type of moving object that travels to the two or more nodes. The first route information is, for example, the fixed route information preferable for the driver. The fixed route information is, for example, route information in which the work burden on the driver is considered to be relatively small when the delivery work is executed according to the route information. The fixed route information is, for example, route information that has been referred to by the driver in the past and is familiar to the driver. The fixed route information may be, for example, route information specified by the driver. For example, the first route information specifies the route on which the moving object travels in the delivery work, represents the temporal limit and the condition for the traveling moving object in the case where the moving object travels on the route, and defines how the driver is to execute the delivery work. The first route information may be added to the route information group. The first route information is obtained by, for example, the obtaining unit 401.

The obtaining unit 401 obtains various types of information used in the processing of each functional unit. The obtaining unit 401 stores the obtained various types of information in the storage unit 400, or outputs the obtained various types of information to each functional unit. The obtaining unit 401 may output the various types of information stored in the storage unit 400, to each functional unit. For example, the obtaining unit 401 obtains the various types of information based on an operation input by the user. For example, the obtaining unit 401 may receive the various types of information from an apparatus different from the information processing apparatus 100.

The obtaining unit 401 obtains, for example, the graph. For example, the obtaining unit 401 obtains the graph by receiving the graph from another computer. The another computer is, for example, the client apparatus 201 or the like. For example, the obtaining unit 401 may obtain the graph by receiving an input of the graph based on an operation input by the user.

The obtaining unit 401 obtains, for example, the processing request demanding creation of the current plan. For example, the obtaining unit 401 obtains the processing request by receiving the processing request from another computer. The another computer is, for example, the client apparatus 201 or the like. For example, the obtaining unit 401 may obtain the processing request by receiving an input of the processing request based on an operation input by the user.

The obtaining unit 401 obtains, for example, one or more pieces of first route information. For example, the obtaining unit 401 obtains the one or more pieces of first route information by receiving the one or more pieces of first route information from another computer. The another computer is, for example, the client apparatus 201 or the like. For example, the obtaining unit 401 may obtain the one or more pieces of first route information by receiving an input of the one or more pieces of first route information based on an operation input by the user.

For example, when the setting unit 402 does not generate one or more pieces of initial route information, the obtaining unit 401 obtains one or more pieces of initial route information, and adds the one or more pieces of initial route information to the route information group to update the route information group to the initial state. The initial state is, for example, a state where the route information group includes one or more initial routes to allow the setting unit 402 to set the reduced cost minimization problem and allow the creation unit 403 to solve the route selection problem. For example, the initial route information defines at least an initial route traveling through two or more of the multiple nodes, among the initial route, a time limit of traveling to at least one of the two or more nodes, and a type of moving object that travels to the two or more nodes. For example, the initial route information defines an initial route that starts from the node representing the logistics center, passes through one of the nodes representing the relay points, and arrives at the node representing the logistics center. For example, the initial route information specifies a route on which the moving object travels in the delivery work, indicates a temporal limit and a condition for the traveling moving object in the case where the moving object travels on the route, and defines how the driver is to execute the delivery work. The one or more pieces of initial route information are, for example, initial route information corresponding to each of the sites other than the logistics center among the multiple sites. For example, the obtaining unit 401 obtains the one or more pieces of initial route information by receiving the one or more pieces of initial route information from another computer. The another computer is, for example, the client apparatus 201 or the like. For example, the obtaining unit 401 may obtain the one or more pieces of initial route information by receiving an input of the one or more pieces of initial route information based on an operation input by the user.

The obtaining unit 401 may obtain a start trigger for starting the processing of any of the functional units. The start trigger is, for example, a predetermined operation input by the user. The start trigger may be, for example, reception of predetermined information from another computer. The start trigger may be, for example, output of predetermined information by any of the functional units. For example, the obtaining unit 401 receives obtaining of the processing request as a start trigger for starting the processing by the setting unit 402 and the creation unit 403.

The setting unit 402 generates the second route information different from any of the obtained one or more pieces of first route information based on the obtained one or more pieces of first route information, and thereby sets the final route information group including the generated second route information and at least one of the one or more pieces of first route information. For example, the second route information defines at least the second route traveling through two or more of the multiple nodes, among the second route, the time limit of traveling to at least one of the two or more nodes, and the type of moving object that travels to the two or more nodes.

The second route information is, for example, the derived route information. The derived route information is, for example, route information that defines at least the second route same as the first route defined by one of the one or more pieces of first route information and that is different from any of the one or more pieces of first route information. The second route information may be, for example, temporary route information. The temporary route information is, for example, route information that defines at least the second route different from any of the first routes defined, respectively, by the one or more pieces of first route information and that is different from any of the one or more pieces of first route information. For example, the second route information specifies a route on which the moving object travels in the delivery work, indicates a temporal limit and a condition for the traveling moving object in the case where the moving object travels on the route, and defines how the driver is to execute the delivery work.

For example, when the obtaining unit 401 does not obtain one or more pieces of initial route information, the setting unit 402 obtains the one or more pieces of initial route information by generating the one or more pieces of initial route information, and adds the one or more pieces of initial route information to the route information group to update the route information group to the initial state. For example, for each of the sites other than the logistics center among the multiple sites, the setting unit 402 generates the initial route information defining the route traveling through at least the site, based on the graph by referring to the storage unit 400, and thereby obtains the one or more pieces of initial route information. The setting unit 402 may thereby add the minimum number, that is one or more, of initial routes that allows setting of the reduced cost minimization problem and allows the solving of the route selection problem in the creation unit 403, to the route information group.

The setting unit 402 sets the final route information group by repeatedly executing the series of processes of setting the reduced cost minimization problem for the optimal solution to the dual problem of the relaxation problem of the route selection problem for the route information group and updating the current route information group until a predetermined condition is satisfied. For example, the final route information group preferably includes the second route information and at least one of the one or more pieces of first route information. The predetermined condition is, for example, such a condition that both of the first route information with a negative reduced cost and the second route information with a negative reduced cost become absent. The predetermined condition may be, for example, such a condition that the series of processes is executed a predetermined number of times. The predetermined condition may be, for example, such a condition that a predetermined time period has elapsed after first execution of the series of processes.

For example, the setting unit 402 sets the reduced cost minimization problem for the optimal solution to the dual problem of the relaxation problem of the route selection problem for the current route information group. For example, the setting unit 402 searches for the first route information with a negative reduced cost among the obtained one or more pieces of first route information, based on the set reduced cost minimization problem. For example, when the first route information with a negative reduced cost is present as a result of searching for the first route information, the setting unit 402 updates the current route information group by adding this first route information to the current route information group.

For example, when the first route information with a negative reduced cost is absent as a result of searching for the first route information, the setting unit 402 determines whether or not the second route information with a negative reduced cost is present by searching for this second route information based on the set reduced cost minimization problem. For example, when the second route information with a negative reduced cost is present, the setting unit 402 generates the second route information with a negative reduced cost, and adds the generated second route information to the current route information group to update the current route information group.

For example, when the first route information with a negative reduced cost is absent, the setting unit 402 determines whether or not the derived route information to be the second route information with a negative reduced cost is present by searching for this derived route information based on the set reduced cost minimization problem. The derived route information is, for example, route information that defines at least the second route same as the first route defined by one of the one or more pieces of first route information. For example, when the derived route information is present, the setting unit 402 generates this derived route information as the second route information with a negative reduced cost, and adds the generated derived route information to the current route information group to update the current route information group.

For example, when the derived route information is absent, the setting unit 402 determines whether or not the temporary route information to be the second route information with a negative reduced cost is present by searching for this temporary route information based on the set reduced cost minimization problem. The temporary route information is, for example, route information that defines at least the second route different from any of the first routes defined, respectively, by the one or more pieces of first route information. For example, when the temporary route information is present, the setting unit 402 generates this temporary route information as the second route information with a negative reduced cost, and adds the generated temporary route information to the current route information group to update the current route information group. The information processing apparatus 100 may set the final route information group including the second route information and at least one of the one or more pieces of the first route information.

The creation unit 403 creates the current plan based on the final route information group set by the setting unit 402 such that the first route information is used preferentially over the second route information. For example, the creation unit 403 sets the weight for the cost in the case where the second route information is used to a value larger than the weight for the cost in the case where the first route information is used, and then sets the objective function indicating the weighted sum of the costs. For example, the weights are specified in advance by the user. For example, the creation unit 403 creates the current plan by solving the route selection problem in which the route information to be used in the current plan is selected from the final route information group such that the value indicated by the objective function is minimized.

For example, the creation unit 403 may create the current plan based on the final route information group set in the setting unit 402 such that the fixed route information is used preferentially over the derived route information and the derived route information is used preferentially over the temporary route information. For example, the creation unit 403 sets the weight for the cost in the case where the derived route information is used to a value larger than the weight for the cost in the case where the fixed route information is used. For example, the creation unit 403 sets the weight for the cost in the case where the temporary route information is used to a value larger than the weight for the cost in the case where the derived route information is used. For example, the creation unit 403 sets the objective function for calculating the weighted sum of the costs, based on the set weights. For example, the creation unit 403 creates the current plan by solving the route selection problem in which the route information to be used in the current plan is selected from the final route information group such that the value indicated by the objective function is minimized.

The creation unit 403 may thereby create the current plan, and enable execution of the current delivery operation. In this case, the creation unit 403 may create the current plan such that the first route information is used preferentially over the second route information, and increase the probability that the driver executes the delivery work according to the first route information instead of the second route information. The creation unit 403 may thus reduce the work burden on the driver. The creation unit 403 may create the current plan such that the second route information is used in addition to the first route information in consideration of the weighted sum of the costs. The creation unit 403 may thus reduce the costs of the delivery operation.

The output unit 404 outputs a processing result of at least one of the functional units. An output form is, for example, displaying the processing result on a display, outputting the processing result to a printer for printing, transmitting the processing result to an external apparatus through the network I/F 303, or storing the processing result in the storage area of the memory 302, the recording medium 305, or the like. The output unit 404 may thereby notify the user of the processing result of at least one of the functional units, and improve convenience of the information processing apparatus 100.

The output unit 404 outputs, for example, the current plan created by the creation unit 403. For example, the output unit 404 transmits the current plan created by the creation unit 403 to another computer. The another computer is, for example, the client apparatus 201. For example, the output unit 404 may output the current plan created by the creation unit 403 such that the user may refer to the current plan. The output unit 404 may thereby make the current plan created by the creation unit 403 usable outside the information processing apparatus 100.

(Specific Example of Functional Configuration of Information Processing Apparatus 100)

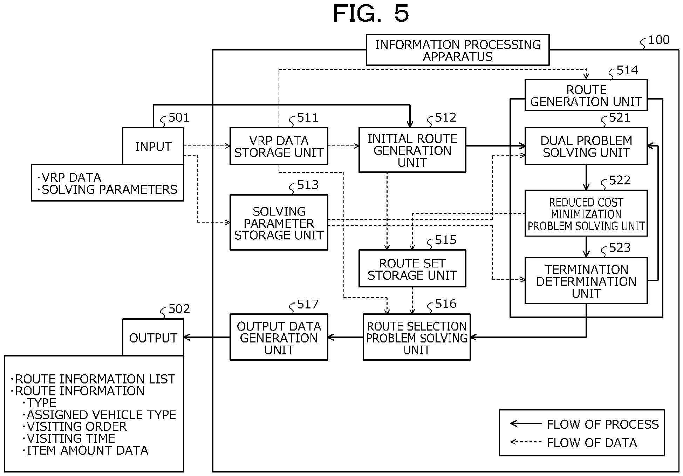

Next, a specific example of the functional configuration of the information processing apparatus 100 is explained by using FIG. 5.

FIG. 5 is a block diagram illustrating the specific example of the functional configuration of the information processing apparatus 100. In FIG. 5, it is desirable that the information processing apparatus 100 creates a plan for appropriately collecting or delivering multiple items via multiple moving objects, by solving the route selection problem in which one or more pieces of route information are selected from the route information group such that various conditions described below are satisfied. The route information indicates at least the route, visiting time of each node on the route, and the type of truck. The moving object is, for example, a large truck, a midsize truck, a small truck, or the like.

For example, one of the conditions is that a truck departing from the node representing the logistics center travels to several nodes and returns to the node representing the logistics center. The nodes to which the truck travels are, for example, nodes representing a convenience store, a supermarket, a warehouse, and the like. A visiting order in which the truck travels to two or more nodes is the route. For example, one of the conditions is that there are multiple types of trucks that vary in capacity and cost. For example, one of the conditions is that the nodes to which the truck is able to travel depend on the type of truck. For example, one of the conditions is that there is an upper limit to the number of usable trucks for each type of truck. For example, one of the conditions is that each truck collects or delivers items from or to the nodes to which the truck has traveled. Any of the trucks may collect and deliver items at the same node being any of the nodes.

For example, one of the conditions is that, for each item, there are a node from which the item is collected and a node to which the item is delivered. For example, the item is transported from the node representing the logistics center to a node representing a site other than the logistics center. For example, the item is transported from a node representing a site other than the logistics center to the node representing the logistics center. For example, the item is transported from a node representing a site other than the logistics center to a node representing a site other than the logistics center.

For example, one of the conditions is that a size is set for each item. For example, one of the conditions is that items are loaded on each truck within a load capacity of the truck. For example, one of the conditions is that a priority is set for each item. For example, one of the conditions is that an item with a high priority is preferentially loaded onto each truck. For example, one of the conditions is that, for each item, whether or not the item is dividable is set.

For example, one of the conditions is that a collection time frame and a delivery time frame are set for each item. A collection time frame [a, b] indicates that, when a truck arrives at an item collection node before time a, the truck waits until the time a, and collects the item by time b. A delivery time frame [c, d] indicates that, when a truck arrives at an item delivery node before time c, the truck waits until the time c, and delivers the item by time d.

For example, one of the conditions is that a truck is unable to move between nodes that are not linked to each other by an edge. For example, one of the conditions is that, for each type of truck, an upper limit of total travel time of the truck is set. For example, one of the conditions is that the truck has to execute at least one of collection and delivery at a node representing a site other than the logistics center. For example, one of the conditions is that, for each type of truck, the delivery cost of the truck is defined by a weighted sum based on a step function, a fixed cost, and traveling time. The step function depends on the traveling time of the truck.

For example, one of the conditions is that delivery or collection for the same node is executed every day. For example, one of the conditions is that one or more pieces of fixed route information preferable for the driver are set. The fixed route information indicates at least the route, the visiting time of each node on the route, and the type of truck. One of the multiple pieces of fixed route information may be selected in the route selection problem. For example, one of the conditions is that, when the fixed route information is not selected in the route selection problem, it is preferable to select the derived route information that indicates at least the same route as the fixed route information and that is different from the fixed route information.

For example, the information processing apparatus 100 desirably creates a plan that enables appropriate collection or delivery of all items and minimization of the total delivery cost by assigning the route information to each of the multiple trucks such that each of the various conditions is satisfied.

The information processing apparatus 100 includes a vehicle routing problem (VRP) data storage unit 511, an initial route generation unit 512, a solving parameter storage unit 513, a route generation unit 514, and a route set storage unit 515. The information processing apparatus 100 further includes a route selection problem solving unit 516 and an output data generation unit 517. The route generation unit 514 includes a dual problem solving unit 521, a reduced cost minimization problem solving unit 522, and a termination determination unit 523.

The VRP data storage unit 511 obtains VRP data, and stores VRP data in input data 501. The VRP data defines the various conditions described above. The VRP data includes, for example, item data, node data, delivery vehicle data, and the fixed route information. The item data indicates the node from which an item is collected and the node to which the item is delivered. The item data indicates whether or not the item is dividable. The item data indicates the priority of the item. The item data indicates the collection time frame and the delivery time frame of the item.

The node data indicates the node representing the logistics center. The node data indicates traveling time between the nodes. The node data indicates the edges coupling the nodes. The delivery vehicle data indicates the load capacity of a truck. The delivery vehicle data indicates the upper limit of the number of usable trucks for each type of truck. The delivery vehicle data indicates, for each type of truck, nodes to which the truck is capable of traveling. The delivery vehicle data indicates, for each type of truck, the upper limit of the total travel time of the truck. The delivery vehicle data indicates, for each type of truck, the step function used in the defining of the delivery cost of the truck. The delivery vehicle data indicates, for each type of truck, the fixed cost used in the defining of the delivery cost of the truck. The fixed route information indicates at least the route, the visiting time of each node on the route, and the type of truck. The VRP data storage unit 511 provides the VRP data to the initial route generation unit 512, the route generation unit 514, and the route selection problem solving unit 516.

The initial route generation unit 512 obtains the VRP data. The initial route generation unit 512 generates, for each of the nodes representing sites other than the logistics center, the initial route information that defines a route traveling through the node, based on the VRP data. For example, the initial route information defines a route that starts from the node representing the logistics center, travels through the node representing the site other than the logistics center, and arrives at the node representing the logistics center. The initial route generation unit 512 provides the generated initial route information to the route set storage unit 515.

The solving parameter storage unit 513 obtains and stores solving parameters in the input data 501. The solving parameters include a penalty coefficient for each of the fixed route information, the derived route information, and the temporary route information. The derived route information indicates at least the route, the visiting time of each node on the route, and the type of truck. The derived route information is route information that indicates the same route as one of the one or more pieces of fixed route information and that is different from any of the one or more pieces of fixed route information. The derived route information is different from any of the one or more pieces of fixed route information at least in the visiting time of each node on the route or the type of truck. The temporary route information indicates at least the route, the visiting time of each node on the route, and the type of truck. The temporary route information is route information different from any of the one or more pieces of fixed route information.

The solving parameters include route generation parameters. The route generation parameters include a time limit indicating an allowable upper limit of time taken for route generation. The route generation parameters include a parameter related to a solver of the dual problem. The solving parameters include route selection parameters. The route selection parameters include a time limit indicating an allowable upper limit of time taken for route selection. The route selection parameters include a parameter related to a solver of the route selection problem. The solving parameter storage unit 513 provides the solving parameters to the route selection problem solving unit 516, the dual problem solving unit 521, and the termination determination unit 523.

The route generation unit 514 obtains the VRP data, and activates the dual problem solving unit 521, the reduced cost minimization problem solving unit 522, and the termination determination unit 523. The dual problem solving unit 521 sets the dual problem of the linear relaxation problem of the route selection problem for the latest route information group. The dual problem solving unit 521 calculates an optimal solution to the set dual problem. The dual problem solving unit 521 provides the optimal solution to the set dual problem to the reduced cost minimization problem solving unit 522.

The reduced cost minimization problem solving unit 522 sets the reduced cost minimization problem for the optimal solution to the dual problem. The reduced cost minimization problem solving unit 522 searches for the fixed route information, the derived route information, or the temporary route information as the route information with a negative reduced cost by solving the reduced cost minimization problem for the optimal solution to the dual problem. When the reduced cost minimization problem solving unit 522 generates the fixed route information, the derived route information, or the temporary route information as the route information with a negative reduced cost by the searching, the reduced cost minimization problem solving unit 522 updates the latest route information group by adding the route information with a negative reduced cost to the latest route information group. The reduced cost minimization problem solving unit 522 provides the latest route information group to the route set storage unit 515. The reduced cost minimization problem solving unit 522 provides information on whether or not the route information with a negative reduced cost is generated, to the termination determination unit 523.

When the route information with a negative reduced cost is not generated in the reduced cost minimization problem solving unit 522, the termination determination unit 523 activates the route selection problem solving unit 516. The termination determination unit 523 activates the route selection problem solving unit 516 when time from activation exceeds a time limit. When the route information with a negative reduced cost is generated in the reduced cost minimization problem solving unit 522 before the time from activation exceeds the time limit, the termination determination unit 523 activates the dual problem solving unit 521 again.

The route set storage unit 515 stores the route information group. The route set storage unit 515 receives the initial route information from the initial route generation unit 512, and adds the initial route information to the route information group. The route set storage unit 515 obtains the latest route information group from the reduced cost minimization problem solving unit 522, and stores the latest route information group. The route set storage unit 515 provides the latest route information group to the route selection problem solving unit 516.

The route selection problem solving unit 516 obtains the VRP data. The route selection problem solving unit 516 obtains the solving parameters. The route selection problem solving unit 516 obtains the latest route information group. The route selection problem solving unit 516 sets the route selection problem that selects multiple pieces of route information to be used in the current plan from the latest route information group by setting the objective function corresponding to the total delivery cost, based on the VRP data and the solving parameters.

A delivery cost of route $r \in R$ indicated by the route information is assumed to be $c_r$. R is a set of routes r. For example, the total delivery cost is defined by the following formula (1). In the formula (1), $x_r \in Z$ is an integer variable. The number of usage of routes r in the current plan is represented by $x_r$.

$$\sum_{r \in R} c_r x_r. \quad \ldots (1)$$

The route selection problem solving unit 516 sets a penalty coefficient p(r) for the route r indicated by the route information such that the fixed route information is selected preferentially over the derived route information and the derived route information is selected preferentially over the temporary route information, and applies the penalty coefficient p(r) to the above formula (1). For example, the penalty coefficient p(r) is defined by the following formula (2). In the formula (2), $\lambda_2 \geq \lambda_1 > 1$ is satisfied.

$$p(r) = \begin{cases} 1 \text{(When the route r is the fixed route)} \\ \lambda_1 \text{(When the route r is the derived route)} \quad \ldots (2) \\ \lambda_2 \text{(When the router r is the temporary route)} \end{cases}$$

For example, the route selection problem solving unit 516 sets the following formula (3), obtained by applying the above formula (2) to the above formula (1), as the objective function. The route selection problem solving unit 516 may thereby allow the current plan to be created such that the total delivery cost is reduced and such that the fixed route information is preferentially selected over the derived route information and the derived route information is preferentially selected over the temporary route information.

$$\sum_{r \in R} p(r) c_r x_r. \quad \ldots (3)$$

The route selection problem solving unit 516 solves the set route selection problem to select multiple pieces of route information to be used in the current plan such that the value of the objective function is minimized, and creates the current plan including the selected multiple pieces of route information. The route selection problem solving unit 516 provides the created current plan to the output data generation unit 517.

The output data generation unit 517 obtains the current plan. The output data generation unit 517 generates output data 502 based on the current plan. The output data 502 indicates the current plan. The output data 502 includes a route information list in which identification information for identifying each of the multiple pieces of route information forming the current plan is recorded. The output data 502 includes the multiple pieces of route information forming the current plan.

The output data 502 includes, for example, a type of route information. The type indicates that the route information is the fixed route information, the derived route information, or the temporary route information. The output data 502 includes, for example, an assigned vehicle type. The assigned vehicle type indicates the type of truck indicated by the route information. The output data 502 includes, for example, a visiting order of each node on the route. The visiting order indicates the route indicated by the route information.

The output data 502 includes, for example, the visiting time of each node on the route. The output data 502 includes, for example, item amount data at each node on the route. The information processing apparatus 100 may thereby create the current plan such that the work burden on the driver is reduced and the total delivery cost for the delivery operation is reduced, and enable execution of the current delivery operation.

(Example of Operation of Information Processing Apparatus 100)

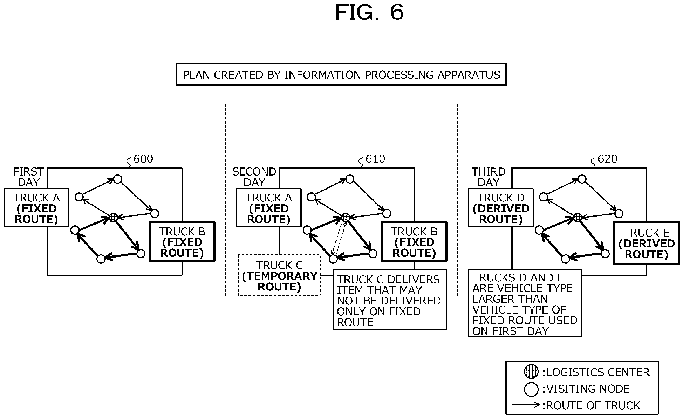

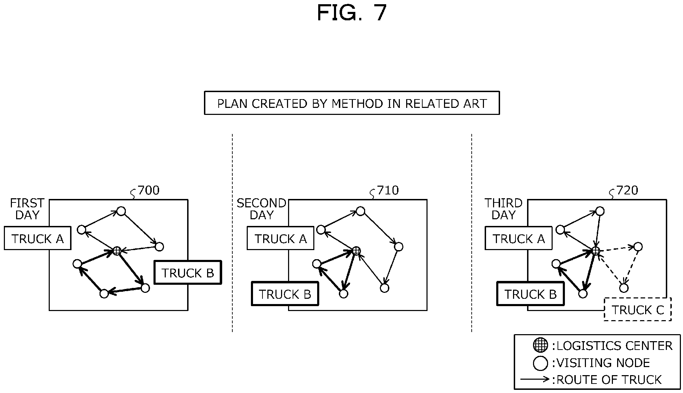

An example of an operation of the information processing apparatus 100 will be explained next by using FIGs. 6 and 7.

FIGs. 6 to 7 are explanatory diagrams illustrating the example of the operation of the information processing apparatus 100. In the example illustrated in FIGs. 6 and 7, the derived route information is route information in which the visiting order is the same as that of the fixed route information and at least one of the visiting time and the assigned vehicle type is different from that in the fixed route information. For example, the derived route information has a role of contributing to reduction of the work burden on the driver by being similar to the fixed route information, has a property of facilitating handling of daily changes in item amount by being dissimilar from the fixed route information, and has a role of contributing to reduction of the total delivery cost.

The temporary route information is route information different from the fixed route information and the derived route information. The temporary route information is route information in which the visiting order is different from that of the fixed route information. Since the visiting order of the temporary route information is independent of the fixed route information, the temporary route information has a property of facilitating handling of daily changes in item amount, and has a role of contributing to reduction of the total delivery cost.

In the following explanation, the route information is represented by r. The route information group is represented by R. The item is represented by i. A set of items i is represented by T. The size of item $i \in T$ is represented by $b_i$. The type of truck is represented by t. A set of trucks that are the type t is represented by U. The number of usable trucks that are the type $t \in U$ is represented by mt. Whether or not the route information r includes the type t of truck is represented by $d_{tr}$. For example, $d_{tr}$ is defined by the following formula (4). The fixed route information is represented by f. A set of pieces of fixed route information is represented by F. Whether or not the route information r is the fixed route information f is represented by $g_{fr}$. For example, $g_{fr}$ is defined by the following formula (5). The number of usage of route information r in the current plan is represented by $x_r$.

$$d_{tr} = \begin{cases} 1 \text{(When the route r uses the truck type t)} \\ 0 \text{(In other cases)} \end{cases} \quad \ldots (4)$$

$$g_{fr} = \begin{cases} 1 \text{(When the route r is the fixed route f)} \\ 0 \text{(In other cases)} \end{cases} \quad \ldots (5)$$

As described above, when the information processing apparatus 100 creates the current plan, the information processing apparatus 100 preferably preferentially selects the fixed route information over the derived route information and preferentially selects the derived route information over the temporary route information. Accordingly, the information processing apparatus 100 sets the route selection problem in which multiple pieces of route information to be used in the current plan are selected from the route information group by setting an objective function illustrated in the following formula (6) and constraint conditions illustrated in the following formulae (7) to (10). The following formula (6) corresponds to the above formula (3).

$$\min_{x} \sum_{r \in R} p(r) c_r x_r \quad \dots (6)$$

$$\sum_{r \in R} a_{ir} x_r \geq b_i (i \in T) \quad \dots (7)$$

$$\sum_{r \in R} d_{tr} x_r \leq m_t (t \in U) \quad \dots (8)$$

$$\sum_{r \in R} g_{fr} x_r \leq 1 (t \in F) \quad \dots (9)$$

$$x_r \geq 0, x_r \in \mathbb{Z} (r \in R) \quad \dots (10)$$

The objective function indicates a value being a target of the minimization. The value indicated by the objective function in the case where the derived route information is used is larger than that in the case where the fixed route information is used, due to the coefficient p(r). As illustrated in the above formula (3), the value indicated by the objective function in the case where the temporary route information is used is larger than that in the case where the derived route information is used, due to the coefficient p(r).

Accordingly, in the minimization of the value indicated by the objective function, the information processing apparatus 100 may be made more likely to preferentially select the fixed route information over the derived route information and preferentially select the derived route information over the temporary route information. The information processing apparatus 100 may thereby set the route selection problem such that the total delivery cost is reduced and such that the fixed route information is selected preferentially over the derived route information and the derived route information is selected preferentially over the temporary route information.

The information processing apparatus 100 sets the route information group R to be referred to in the route selection problem, according to a column generation method. In the column generation method, the route information group R is set by repeating a unit process in which the route information r is generated. (1) For example, the information processing apparatus 100 sets the route information group R to an initial state. (2) For example, the information processing apparatus 100 solves the dual problem of the linear relaxation problem of the route selection problem for the current route information group R by using the solver of the dual problem, and thereby calculates the optimal solution to the dual problem.

(3) For example, the information processing apparatus 100 solves the reduced cost minimization problem for the dual problem based on the optimal solution to the dual problem by using the solver of the reduced cost minimization problem, and thereby calculates the solution to the reduced cost minimization problem. (4) When the reduced cost of the calculated solution is negative, the information processing apparatus 100 adds the route information corresponding to the solution to the route information group R, and returns to the process of (2) described above. The processes of (2) to (4) described above correspond to the unit process described above. When the reduced cost of the calculated solution is not negative, the information processing apparatus 100 determines the current route information group R as the final route information group R to be referred to in the route selection problem.

Since the dual problem is a linear programming problem, the information processing apparatus 100 may calculate the optimal solution to the dual problem at relatively high speed. Since processing time taken to calculate the optimal solution to the reduced cost minimization problem is likely to increase, the information processing apparatus 100 preferably solves the reduced cost minimization problem by local search, and calculates a local solution of the reduced cost minimization problem.

Since the relaxation problem of the route selection problem is obtained by removing an integer constraint of each variable $x_r$ in the route selection problem, the relaxation problem is defined by an objective function of the following formula (11) and constraint conditions of the following formulae (12) to (15). The relaxation problem is a linear programming problem. A dual problem is defined for the linear programming problem. The dual problem for the relaxation problem is defined by an objective function of the following formula (16) and constraint conditions of the following formulae (17) to (20).

$$\min_{x} \sum_{r \in R} p(r)\, c_r x_r \quad \ldots (11)$$

$$\sum_{r \in R} a_{ir}\, x_r \geq b_i (i \in T) \quad \ldots (12)$$

$$\sum_{r \in R} d_{tr}\, x_r \leq m_t (t \in T) \quad \ldots (13)$$

$$\sum_{r \in R} g_{fr}\, x_r \leq 1 (f \in F) \quad \ldots (14)$$

$$x_r \geq 0,\, x_r \in \mathbb{R}(r \in R) \quad \ldots (15)$$

$$\min_{y,z,w} -\sum_{i \in T} b_i y_i + \sum_{t \in U} m_t z_t + \sum_{f \in F} w_f \quad \ldots (16)$$

$$\sum_{i \in T} a_{ir} y_i - \sum_{t \in U} d_{tr} z_t - \sum_{f \in F} g_{fr} w_f \leq p(r) c_r (r \in R) \quad \ldots (17)$$

$$y_i \geq 0,\, y_i \in \mathbb{R}(i \in T) \quad \ldots (18)$$

$$z_t \geq 0,\, z_t \in \mathbb{R}(t \in T) \quad \ldots (19)$$

$$w_f \geq 0,\, w_f \in \mathbb{R}(f \in F) \quad \ldots (20)$$

The optimal solution to the dual problem in the unit process repeated in the column generation method is assumed to be $(y^*, z^*, w^*)$. In this case, the reduced cost minimization problem is defined by a variable r indicating the route information, a variable $\tilde{a}_i$ that is the size of the item i to be transported in the route information r, a 0-1 variable $\tilde{d}_t$ that takes a value 1 when the route information r includes the type t of truck, a 0-1 variable $\tilde{g}_f$ that takes a value 1 when the route information r is the fixed route f, an objective function of the following formula (21), constraint conditions according to the various conditions described above, and constraint conditions of the following formulae (22) to (24). For the sake of convenience, a character with "~" at the top is expressed as "character~" in some cases.

$$\min_{r,\tilde{a},\tilde{d},\tilde{g}} p(r)c_r - \sum_{i \in T} \tilde{a}_i y_i^* - \sum_{t \in U} \tilde{d}_t z_t^* - \sum_{f \in F} \tilde{g}_f w_f^* \quad \ldots (21)$$

$$\tilde{a}_i \in \mathbb{Z}(i \in T) \quad \ldots (22)$$

$$\tilde{d}_t \in \{0,1\}(t \in U) \quad \ldots (23)$$

$$\tilde{g}_f \in \{0,1\}(f \in F) \quad ...(24)$$

For example, the information processing apparatus 100 implements the processes of (2) to (4) described above by performing processes of (a) to (c) described below, and handles the unit process. (a) For example, the information processing apparatus 100 performs local search in which items are assigned to all pieces of fixed route information. For example, when the information processing apparatus 100 finds the fixed route information with a negative reduced cost, the information processing apparatus 100 updates the current route information group R by adding the fixed route information with a negative reduced cost to the current route information group R, and terminates one execution of the above-mentioned unit process. For example, when the information processing apparatus 100 finds no fixed route information with a negative reduced cost, the information processing apparatus 100 proceeds to the process of (b).

(b) For example, the information processing apparatus 100 performs local search in which the derived route information is generated for all pieces of fixed route information. For example, when the information processing apparatus 100 finds the derived route information with a negative reduced cost, the information processing apparatus 100 updates the current route information group R by adding the derived route information with a negative reduced cost to the current route information group R, and terminates one execution of the above-described unit process. For example, when the information processing apparatus 100 finds no derived route information with a negative reduced cost, the information processing apparatus 100 proceeds to the process of (c).

(c) For example, the information processing apparatus 100 performs local search in which the temporary route information is generated. For example, when the information processing apparatus 100 finds the temporary route information with a negative reduced cost, the information processing apparatus 100 updates the current route information group R by adding the temporary route information with a negative reduced cost to the current route information group R, and terminates one execution of the above-described unit process. For example, when the information processing apparatus 100 finds no temporary route information with a negative reduced cost, the information processing apparatus 100 determines the current route information group R as the final route information group R, and terminates the unit process.

The information processing apparatus 100 may thereby determine the final route information group R. The information processing apparatus 100 may reduce the processing load and the processing time taken to determine the final route information group R, from those in the case where all of the fixed route information, the derived route information, and the temporary route information are examined for each unit process. The information processing apparatus 100 may examine the fixed route information, the derived route information, and the temporary route information in descending order of priority for each unit process. The information processing apparatus 100 may be thus made more likely to appropriately determine the final route information group R while reducing the processing load and the processing time.

Specific examples of the above-mentioned processes (a) to (c) will be explained. In the following explanation, $r_0$ represents the initial route information. N represents an additional node set. (A) The information processing apparatus 100 sets r: = $r_0$. (B) The information processing apparatus 100 sets a route information group R' in which one task is assigned to the route information r. The task is, for example, transporting an item. The information processing apparatus 100 specifies the route information r' ∈ R in R' that satisfies the constraint conditions being the conditions described above and in which the value indicated by the objective function g() of the reduced cost minimization problem is minimized.

(C) When the additional node set is not empty, the information processing apparatus 100 executes processes of (C-1) to (C-3) described below on a node v ∈ N. (C-1) The information processing apparatus 100 specifies new route information $r_v$ obtained by adding the node v to the visiting order of the route information r. (C-2) The information processing apparatus 100 specifies a route information group $R'_v$ in which one task is assigned to the route information $r_v$. The information processing apparatus 100 specifies the route information $r'_v \in R$ in $R'_v$ that satisfies the constraint conditions being the conditions described above and in which the value indicated by the objective function g() of the reduced cost minimization problem is minimized. (C-3) When g(r') > g($r'_v$) is satisfied, the information processing apparatus 100 sets r': = $r'_v$.

(D) When g(r) < g(r') is satisfied, the information processing apparatus 100 outputs the route information r as the solution of the reduced cost minimization problem. (E) When g(r) < g(r') is not satisfied, the information processing apparatus 100 returns to the process of (B). The information processing apparatus 100 may thereby output the route information r to be the solution of the reduced cost minimization problem, and make the route information group R updatable.

For example, in the process of (a), the information processing apparatus 100 sets each piece of fixed route information to $r_0$, normally sets the additional node set N to an empty set, and executes the processes of (A) to (E) described above. The information processing apparatus 100 may thereby specify the fixed route information to be the solution of the reduced cost minimization problem.

For example, in the process of (b), for each piece of fixed route information i and each type t of truck, the information processing apparatus 100 sets the derived route information that indicates the type t of truck and that indicates the same visiting order as the visiting order in the fixed route information i, to $r_0$. For example, in the process of (b), the information processing apparatus 100 normally sets the additional node set N to an empty set. Then, for example, in the process of (b), the information processing apparatus 100 executes the processes of (A) to (E) described above. The information processing apparatus 100 may thereby specify the derived route information to be the solution of the reduced cost minimization problem.

For example, in the process of (c), for each node v indicating a site other than the logistics center and each type t of truck, the information processing apparatus 100 specifies the visiting order that starts from the node representing the logistics center, passes the node v, and returns to the node representing the logistics center. For example, in the process of (c), the information processing apparatus 100 sets the temporary route information indicating the specified visiting order and indicating the type t of the truck, to $r_0$. For example, the information processing apparatus 100 sets the additional node set N as a node set in which nodes representing sites other than the logistics center are collected. Then, for example, the information processing apparatus 100 executes the processes of (A) to (E) described above. The information processing apparatus 100 may thereby specify the temporary route information to be the solution of the reduced cost minimization problem.

Although the case where the information processing apparatus 100 does not have to examine all of the fixed route information, the derived route information, and the temporary route information for each unit process has been explained, the embodiment is not limited to this case. For example, there may be a case where the information processing apparatus 100 examines all of the fixed route information, the derived route information, and the temporary route information for each unit process, finds appropriate route information with a negative reduced cost, and determines the final route information group R. Description continues to explanation of FIG. 6, and an example of a plan actually created by the information processing apparatus 100 will be explained.

The graph 600 in FIG. 6 illustrates a plan created for the first day by the information processing apparatus 100. As illustrated in the graph 600, the information processing apparatus 100 may create a plan using the fixed route information. The information processing apparatus 100 may thus reduce the work burden on the driver.

The graph 610 in FIG. 6 illustrates a plan created for the second day by the information processing apparatus 100. As illustrated in the graph 610, the information processing apparatus 100 may create a plan using the fixed route information. The information processing apparatus 100 may thus reduce the work burden on the driver. As illustrated in the graph 610, when there is an item that may not be delivered to one of the nodes only with the fixed route information, the information processing apparatus 100 may create a plan such that the temporary route information is used. The information processing apparatus 100 may thus enable appropriate delivery of the items to the nodes.

The graph 620 in FIG. 6 illustrates a plan created for the third day by the information processing apparatus 100. As illustrated in the graph 620, the information processing apparatus 100 may create a plan using the derived route information having the same visiting order as that of the fixed route information. The information processing apparatus 100 may thereby reduce the work burden on the driver while enabling appropriate delivery of the items to the nodes. Description continues to explanation of FIG. 7, and an example of a plan created by a method of related art will be explained.

The method of related art is a method of creating a plan in which the fixed route information is absent and new route information is generated without limitations on the daily visiting order, the type of truck, and the like. The graph 700 in FIG. 7 illustrates a plan created for the first day by the method of related art. As illustrated in the graph 700, the method of related art is assumed to create the same plan as that of the information processing apparatus 100.

The graph 710 in FIG. 7 illustrates a plan created for the second day by the method of related art. As illustrated in the graph 710, the method of related art sometimes creates a plan for the second day by generating new route information in which the visiting order is different from that of the route information used in the plan created for the first day. Accordingly, it is difficult to reduce the work burden on the driver in the method of related art.

The graph 720 in FIG. 7 illustrates a plan created for the third day by the method of related art. As illustrated in the graph 720, the method of related art sometimes creates a plan for the third day by generating new route information in which the visiting order is different from both of those in the route information used in the plan created for the first day and the route information used in the plan created for the second day. Accordingly, it is difficult to reduce the work burden on the driver in the method of related art.

(Example of Effects Produced by Information Processing Apparatus 100)

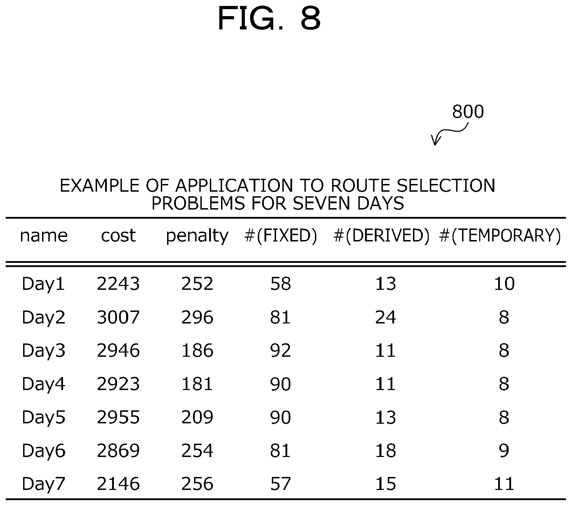

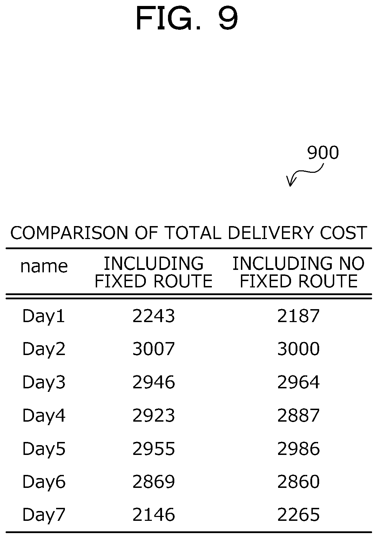

Next, an example of effects produced by the information processing apparatus 100 is explained by using FIGs. 8 and 9.

FIGs. 8 and 9 are explanatory diagrams illustrating the example of effects. In the example of FIGs. 8 and 9, the information processing apparatus 100 is applied to a distribution case. The distribution case is defined by delivery data for seven days for a specific area. The number of nodes related to the specific area is assumed to be 34. The number of items is assumed to be about 300 per day. Here, 119 pieces of fixed route information are prepared in advance. The penalty

coefficient $\lambda_1$ is 1.3. The penalty coefficient $\lambda_2$ is 1.5. The description proceeds to explanation of FIG. 8.

The table 800 of FIG. 8 illustrates a plan created for each day by the information processing apparatus 100. The "name" is an instance name for identifying the plan. The instance name indicates a number of a day of the plan. The "cost" indicates a total delivery cost not including a penalty. The "penalty" indicates a total penalty related to the derived route information and the temporary route information. The "#(fixed)" indicates the number of pieces of fixed route information used in the plan. The "#(derived)" indicates the number of pieces of derived route information used in the plan. The "#(temporary)" indicates the number of pieces of temporary route information used in the plan.

As illustrated in the table 800, the information processing apparatus 100 may create a plan for each day such that the use frequency of the fixed route information is highest, followed by the derived route information and the temporary route information in this order. As illustrated in the table 800, the information processing apparatus 100 may adopt the fixed route information and the derived route information for about 90% of the route information used in the plan. The information processing apparatus 100 may thereby make the visiting order of the truck less likely to change daily, and reduce the work burden on the driver. Next, the description proceeds to explanation of FIG. 9.

The table 900 in FIG. 9 illustrates the total delivery costs not including the penalties in the respective plans for seven days created for each of the case where the fixed route information is present and the case where the fixed route information is absent. An upper limit to the processing time in creation of the plan is assumed to be 3600 seconds.

As illustrated in the table 900, an adverse effect on the total delivery cost tends not to occur even when the fixed route information is present. As illustrated in the table 900, the total delivery cost in the case where the fixed route information is present is lower than that in the case where the fixed route information is absent, in some days. Since there is an upper limit to the processing time in creation of the plan, it is assumed that there is a situation where a preferable plan is more likely to be created in the case where the fixed route information is present than in the case where the fixed route information is absent. As illustrated in the tables 800 and 900, the information processing apparatus 100 may create an appropriate plan to reduce the total delivery cost while reducing the work burden on the driver.

(Overall Processing Procedure)

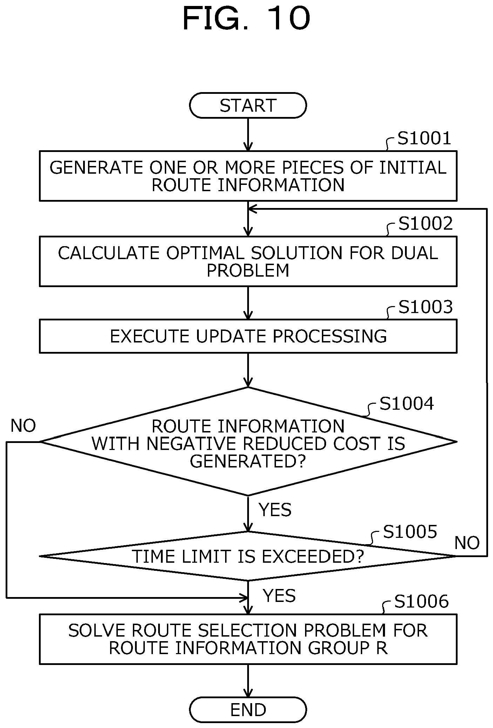

Next, an example of an overall processing procedure executed by the information processing apparatus 100 will be explained by using FIG. 10. The overall processing is implemented by, for example, the CPU 301, the storage area of the memory 302, the recording medium 305, or the like, and the network I/F 303 illustrated in FIG. 3.

FIG. 10 is a flowchart illustrating an example of the overall processing procedure. In FIG. 10, the information processing apparatus 100 generates one or more pieces of initial route information, and registers the generated initial route information in the route information group R (step S1001). Next, the information processing apparatus 100 proceeds to a process of step S1002.

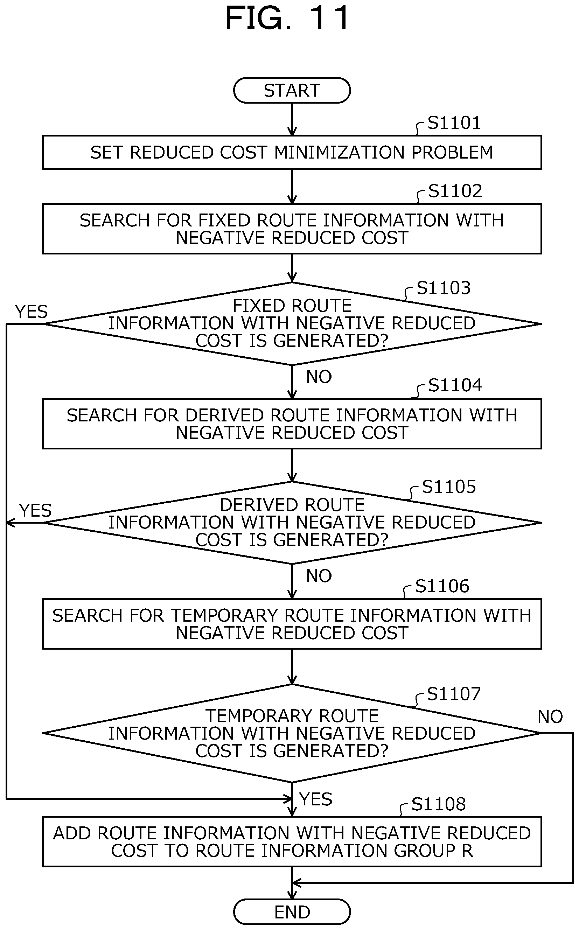

In step S1002, the information processing apparatus 100 calculates the optimal solution to the dual problem of the linear relaxation problem of the route selection problem for the route information group R (step S1002). Next, the information processing apparatus 100 solves the reduced cost minimization problem for the calculated optimal solution to the dual problem by executing update processing to be described later in FIG. 11 (step S1003).

The information processing apparatus 100 determines whether or not the route information with a negative reduced cost is generated (step S1004). When the route information with a negative reduced cost is generated (step S1004: Yes), the information processing apparatus 100 proceeds to a process of step S1005. Meanwhile, when the route information with a negative reduced cost is not generated (step S1004: No), the information processing apparatus 100 proceeds to a process of step S1006.

In step S1005, the information processing apparatus 100 determines whether or not the time limit is exceeded (step S1005). When the time limit is exceeded (step S1005: Yes), the information processing apparatus 100 proceeds to a process of step S1006. Meanwhile, when the time limit has not been exceeded (step S1005: No), the information processing apparatus 100 returns to the process of step S1002.

In step S1006, the information processing apparatus 100 selects one or more pieces of route information from the route information group R by solving the route selection problem for the route information group R (step S1006). The information processing apparatus 100 then terminates the overall processing.

(Update Processing Procedure)

Next, an example of an update processing procedure executed by the information processing apparatus 100 is explained by using FIG. 11. The update processing is implemented by, for example, the CPU 301, the storage area of the memory 302, the recording medium 305, or the like, and the network I/F 303 illustrated in FIG. 3.

FIG. 11 is a flowchart illustrating the example of the update processing procedure. In FIG. 11, the information processing apparatus 100 sets the reduced cost minimization problem for the optimal solution to the dual problem (step S1101). The information processing apparatus 100 refers to the reduced cost minimization problem, and searches one or more pieces of fixed route information for the fixed route information with a negative reduced cost based on the one or more pieces of fixed route information (step S1102).

The information processing apparatus 100 determines whether or not the fixed route information with a negative reduced cost is generated by the searching (step S1103). When the fixed route information with a negative reduced cost is generated (step S1103: Yes), the information processing apparatus 100 proceeds to a process of step S1108. Meanwhile, when the fixed route information with a negative reduced cost is not generated (step S1103: No), the information processing apparatus 100 proceeds to a process of step S1104.

In step S1104, the information processing apparatus 100 refers to the reduced cost minimization problem, and searches for the derived route information with a negative reduced cost based on the one or more pieces of fixed route information (step S1104). The information processing apparatus 100 determines whether or not the derived route information with a negative reduced cost is generated by the searching (step S1105). When the derived route information with a negative reduced cost is generated (step S1105: Yes), the information processing apparatus 100 proceeds to the process of step S1108. Meanwhile, when the derived route information with a negative reduced cost is not generated (step S1105: No), the information processing apparatus 100 proceeds to a process of step S1106.

In step S1106, the information processing apparatus 100 refers to the reduced cost minimization problem, and searches for the temporary route information with a negative reduced cost based on the one or more pieces of fixed route information (step S1106). The information processing apparatus 100 determines whether or not the temporary route information with a negative reduced cost is generated by the searching (step S1107). When the temporary route information with a negative reduced cost is generated (step S1107: Yes), the information processing apparatus 100 proceeds to the process of step S1108. Meanwhile, when the temporary route information with a negative reduced cost is not generated (step S1107: No), the information processing apparatus 100 terminates the update processing.

In step S1108, the information processing apparatus 100 adds the route information with a negative reduced cost to the route information group R (step S1108). The information processing apparatus 100 then terminates the update processing. The information processing apparatus 100 may change the processing order of some of the steps in each of the flowcharts of FIGs. 10 and 11, and execute the steps. The information processing apparatus 100 may skip the processes of some of the steps in each of the flowcharts of FIGs. 10 and 11.

As explained above, according to the information processing apparatus 100, one or more pieces of first route information may be obtained. According to the information processing apparatus 100, generating the second route information different from any of the one or more pieces of first route information based on the one or more pieces of first route information enables setting of the route information group including the generated second route information and at least one of the one or more pieces of first route information. According to the information processing apparatus 100, it is possible to create a plan that defines a route on which each of the multiple moving objects travels to two or more of the multiple nodes, based on the set route information group such that the first route information is used preferentially over the second route information. The information processing apparatus 100 may thereby reduce a work burden on an executioner executing the plan. The information processing apparatus 100 may reduce the cost of executing the plan.

According to the information processing apparatus 100, it is possible to set the weight for the cost in the case where the second route information is used to a value larger than the weight for the cost in the case where the first route information is used. According to the information processing apparatus 100, it is possible to create the plan by solving the route selection problem in which the route information to be used in the plan is selected from the route information group such that the weighted sum of the costs is minimized. The information processing apparatus 100 may thereby create a plan in which the first route information is used preferentially over the second route information. The information processing apparatus 100 may thus reduce the work burden on the executioner executing the plan.

According to the information processing apparatus 100, it is possible to set the route information group such that the route information group includes one or more pieces of initial route information in the initial state. According to the information processing apparatus 100, it is possible to set the reduced cost minimization problem for the optimal solution to the dual problem of the relaxation problem of the route selection problem for the route information group. According to the information processing apparatus 100, it is possible to repeatedly execute the series of processes based on the set reduced cost minimization problem. According to the information processing apparatus 100, in the series of processes, when the first route information with a negative reduced cost is present among the obtained one or more pieces of first route information, it is possible to add this first route information to the route information group. According to the information processing apparatus 100, in the series of processes, when the first route information with a negative reduced cost is absent, it is possible to generate the second route information with a negative reduced cost and add the second route information to the route information group. The information processing apparatus 100 may thereby set an appropriate route information group. The information processing apparatus 100 may reduce the processing time taken to set the route information group.

According to the information processing apparatus 100, it is possible to generate the second route information with a negative reduced cost by searching for the second route information with a negative reduced cost that defines at least the second route same as the first route defined by one of the one or more pieces of first route information. The information processing apparatus 100 may thereby generate route information with a relatively-high degree of freedom. The information processing apparatus 100 may thus facilitate reduction of the cost of the plan while reducing the work burden on the executioner executing the plan.

According to the information processing apparatus 100, it is possible to generate the second route information with a negative reduced cost by searching for the second route information with a negative reduced cost that defines at least the second route different from any of the first routes defined, respectively, by the one or more pieces of first route information. The information processing apparatus 100 may thereby generate route information with a relatively-high degree of freedom. The information processing apparatus 100 may thus facilitate reduction of the cost of the plan.

According to the information processing apparatus 100, it is possible to repeatedly execute the series of processes until both of the first route information with a negative reduced cost and the second route information with a negative reduced cost become absent. The information processing apparatus 100 may thereby set an appropriate route information group.

According to the information processing apparatus 100, it is possible to generate the route information that defines at least the second route same as the first route defined by one of the one or more pieces of first route information and that is different from any of the one or more pieces of first route information, as the second route information. The information processing apparatus 100 may thereby generate route information with a relatively-high degree of freedom. The information processing apparatus 100 may thus facilitate reduction of the cost of the plan while reducing the work burden on the executioner executing the plan.

According to the information processing apparatus 100, it is possible to generate the route information that defines at least the second route different from any of the first routes defined, respectively, by the one or more pieces of first route information and that is different from any of the one or more pieces of first route information, as the second route information. The information processing apparatus 100 may thereby generate route information with a relatively-high degree of freedom. The information processing apparatus 100 may thus facilitate reduction of the cost of the plan.

The information processing method explained in the present embodiment may be implemented by causing a computer such as a PC or a workstation to execute a program prepared in advance. The information processing program explained in the present embodiment is recorded in a computer-readable recording medium, and is executed by being read from the recording medium by a computer. The recording medium is a hard disk, a flexible disk, a compact disc (CD)-ROM, a magneto optical (MO) disc, a Digital Versatile Disc (DVD), or the like. The information processing program explained in the present embodiment may be distributed via a network such as the Internet.

**Claims**

1. An information processing program comprising instructions which, when executed by a computer, cause the computer to execute processing comprising:

   obtaining one or more pieces of first route information, each of the one or more pieces of first route information including, among parameters, at least a first route being a route traveling through two or more of a plurality of nodes, the parameters including: the first route, a time limit of traveling to at least one of the two or more nodes, and a type of moving object that travels to the two or more nodes;
   generating second route information based on the one or more pieces of first route information and thereby setting a route information group including the second route information and at least one of the one or more pieces of first route information, the second route information being different from any of the one or more pieces of first route information and defining at least a second route traveling through two or more of the plurality of nodes, among the second route, a time limit of traveling to at least one of the two or more nodes, and a type of moving object that travels to the two or more nodes; and
   creating a plan defining a route on which each of a plurality of moving objects travels to two or more of the plurality of nodes, based on the route information group such that the first route information is used preferentially over the second route information.

2. The information processing program according to claim 1, wherein
   the creating of the plan includes setting a weight for a cost in a case where the second route information is used to a value larger than a weight for a cost in a case where the first route information is used, and then solving a route selection problem in which route information to be used in the plan is selected from the route information group such that a weighted sum of the costs is minimized.

3. The information processing program according to claim 2, wherein

the route information group includes one or more pieces of initial route information in an initial state, and

the setting of the route information group includes setting the route information group including the second route information and at least one of the one or more pieces of first route information by repeatedly executing a series of processes based on a reduced cost minimization problem for an optimal solution to a dual problem of a relaxation problem of the route selection problem for the route information group, the series of processes including: in a case where the first route information with a negative reduced cost is present, adding the first route information with a negative reduced cost among the one or more pieces of first route information to the route information group, and in a case where the first route information with a negative reduced cost is absent, generating the second route information with a negative reduced cost and adding the second route information with a negative reduced cost to the route information group.

4. The information processing program according to claim 3, wherein
the setting of the route information group includes:

generating, when the first route information with a negative reduced cost is absent based on the reduced cost minimization problem, the second route information with a negative reduced cost, by searching for the second route information with a negative reduced cost that defines at least the second route same as the first route defined by one of the one or more pieces of first route information, and
adding the generated second route information to the route information group.

5. The information processing program according to claim 3 or 4, wherein
the setting of the route information group includes:

generating, when the first route information with a negative reduced cost is absent based on the reduced cost minimization problem, the second route information with a negative reduced cost, by searching for the second route information with a negative reduced cost that defines at least the second route different from any of the first routes defined, respectively, by the one or more pieces of first route information, and
adding the generated second route information to the route information group.

6. The information processing program according to claim 3, wherein
the setting of the route information group includes:
repeatedly executing the series of processes until both of the first route information with a negative reduced cost and the second route information with a negative reduced cost become absent.

7. An information processing method implemented by a computer, the information processing method comprising:

obtaining one or more pieces of first route information, each of the one or more pieces of first route information including, among parameters, at least a first route being a route traveling through two or more of a plurality of nodes, the parameters including: the first route, a time limit of traveling to at least one of the two or more nodes, and a type of moving object that travels to the two or more nodes;
generating second route information based on the one or more pieces of first route information and thereby setting a route information group including the second route information and at least one of the one or more pieces of first route information, the second route information being different from any of the one or more pieces of first route information and defining at least a second route traveling through two or more of the plurality of nodes, among the second route, a time limit of traveling to at least one of the two or more nodes, and a type of moving object that travels to the two or more nodes; and
creating a plan defining a route on which each of a plurality of moving objects travels to two or more of the plurality of nodes, based on the route information group such that the first route information is used preferentially over the second route information.

8. An information processing apparatus comprising a control unit configured to execute processing comprising:

obtaining one or more pieces of first route information, each of the one or more pieces of first route information including, among parameters, at least a first route being a route traveling through two or more of a plurality of nodes, the parameters including: the first route, a time limit of traveling to at least one of the two or more nodes, and a type of moving object that travels to the two or more nodes;
generating second route information based on the one or more pieces of first route information and thereby setting a route information group including the second route information and at least one of the one or more pieces of first route information, the second route information being different from any of the one or more pieces of first route information and defining at least a second route traveling through two or more of the plurality of nodes, among the second route, a time limit of traveling to at least one of the two or more nodes, and a type of moving object that travels to the two or more nodes; and

creating a plan defining a route on which each of a plurality of moving objects travels to two or more of the plurality of nodes, based on the route information group such that the first route information is used preferentially over the second route information.

# FIG. 1

# FIG. 2

200

100

210

201

201

201

# FIG. 3

# FIG. 4

# FIG. 5

INFORMATION PROCESSING APPARATUS

~100

~514 ROUTE GENERATION UNIT

~501 INPUT

· VRP DATA
· SOLVING PARAMETERS

~511 VRP DATA STORAGE UNIT

~512 INITIAL ROUTE GENERATION UNIT

~521 DUAL PROBLEM SOLVING UNIT

~522 REDUCED COST MINIMIZATION PROBLEM SOLVING UNIT

~513 SOLVING PARAMETER STORAGE UNIT

~515 ROUTE SET STORAGE UNIT

~523 TERMINATION DETERMINATION UNIT

~502 OUTPUT

· ROUTE INFORMATION LIST
· ROUTE INFORMATION
  · TYPE
  · ASSIGNED VEHICLE TYPE
  · VISITING ORDER
  · VISITING TIME
  · ITEM AMOUNT DATA

~517 OUTPUT DATA GENERATION UNIT

~516 ROUTE SELECTION PROBLEM SOLVING UNIT

← FLOW OF PROCESS
←----- FLOW OF DATA

# FIG. 6

PLAN CREATED BY INFORMATION PROCESSING APPARATUS

FIRST DAY ⌐600

TRUCK A **(FIXED ROUTE)**

TRUCK B **(FIXED ROUTE)**

SECOND DAY ⌐610

TRUCK A **(FIXED ROUTE)**

TRUCK C **(TEMPORARY ROUTE)**

TRUCK B **(FIXED ROUTE)**

TRUCK C DELIVERS ITEM THAT MAY NOT BE DELIVERED ONLY ON FIXED ROUTE

THIRD DAY ⌐620

TRUCK D **(DERIVED ROUTE)**

TRUCK E **(DERIVED ROUTE)**

TRUCKS D AND E ARE VEHICLE TYPE LARGER THAN VEHICLE TYPE OF FIXED ROUTE USED ON FIRST DAY

⊕ :LOGISTICS CENTER
◯ :VISITING NODE
⟶ :ROUTE OF TRUCK

# FIG. 7

PLAN CREATED BY METHOD IN RELATED ART

FIRST DAY — 700 — TRUCK A, TRUCK B

SECOND DAY — 710 — TRUCK A, TRUCK B

THIRD DAY — 720 — TRUCK A, TRUCK B, TRUCK C

⊕ :LOGISTICS CENTER
○ :VISITING NODE
——▶ :ROUTE OF TRUCK

# FIG. 8

800

EXAMPLE OF APPLICATION TO ROUTE SELECTION
PROBLEMS FOR SEVEN DAYS

| name | cost | penalty | #(FIXED) | #(DERIVED) | #(TEMPORARY) |
|------|------|---------|----------|------------|--------------|
| Day1 | 2243 | 252 | 58 | 13 | 10 |
| Day2 | 3007 | 296 | 81 | 24 | 8 |
| Day3 | 2946 | 186 | 92 | 11 | 8 |
| Day4 | 2923 | 181 | 90 | 11 | 8 |
| Day5 | 2955 | 209 | 90 | 13 | 8 |
| Day6 | 2869 | 254 | 81 | 18 | 9 |
| Day7 | 2146 | 256 | 57 | 15 | 11 |

# FIG. 9

900

COMPARISON OF TOTAL DELIVERY COST

| name | INCLUDING FIXED ROUTE | INCLUDING NO FIXED ROUTE |
| --- | --- | --- |
| Day1 | 2243 | 2187 |
| Day2 | 3007 | 3000 |
| Day3 | 2946 | 2964 |
| Day4 | 2923 | 2887 |
| Day5 | 2955 | 2986 |
| Day6 | 2869 | 2860 |
| Day7 | 2146 | 2265 |

# FIG. 10

START

S1001
GENERATE ONE OR MORE PIECES OF INITIAL ROUTE INFORMATION

S1002
CALCULATE OPTIMAL SOLUTION FOR DUAL PROBLEM

S1003
EXECUTE UPDATE PROCESSING

S1004
ROUTE INFORMATION WITH NEGATIVE REDUCED COST IS GENERATED?
NO
YES

S1005
TIME LIMIT IS EXCEEDED?
NO
YES

S1006
SOLVE ROUTE SELECTION PROBLEM FOR ROUTE INFORMATION GROUP R

END

# FIG. 11

START

S1101
SET REDUCED COST MINIMIZATION PROBLEM

S1102
SEARCH FOR FIXED ROUTE INFORMATION WITH NEGATIVE REDUCED COST

S1103
FIXED ROUTE INFORMATION WITH NEGATIVE REDUCED COST IS GENERATED?

YES

NO

S1104
SEARCH FOR DERIVED ROUTE INFORMATION WITH NEGATIVE REDUCED COST

S1105
DERIVED ROUTE INFORMATION WITH NEGATIVE REDUCED COST IS GENERATED?

YES

NO

S1106
SEARCH FOR TEMPORARY ROUTE INFORMATION WITH NEGATIVE REDUCED COST

S1107
TEMPORARY ROUTE INFORMATION WITH NEGATIVE REDUCED COST IS GENERATED?

NO

YES

S1108
ADD ROUTE INFORMATION WITH NEGATIVE REDUCED COST TO ROUTE INFORMATION GROUP R

END

Europäisches
Patentamt
European
Patent Office
Office européen
des brevets

# EUROPEAN SEARCH REPORT

Application Number

EP 24 18 8860

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LI J Q ET AL: "Real-time vehicle rerouting problems with time windows", EUROPEAN JOURNAL OF OPERATIONAL RESEARCH, ELSEVIER, AMSTERDAM, NL, vol. 194, no. 3, 1 May 2009 (2009-05-01), pages 711-727, XP025627458, ISSN: 0377-2217, DOI: 10.1016/J.EJOR.2007.12.037 [retrieved on 2008-02-01] * the whole document * | 1-8 | INV. G06Q10/047 G01C21/34 |
| A | US 2012/158299 A1 (CERECKE CARL DAVID JAMES [NZ] ET AL) 21 June 2012 (2012-06-21) * paragraph [0013] - paragraph [0160] * | 1-8 | |

TECHNICAL FIELDS SEARCHED (IPC)

G01C
G06Q

The present search report has been drawn up for all claims

| Place of search | Date of completion of the search | Examiner |
|---|---|---|
| Munich | 27 September 2024 | Jullien, Sami |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

  .......................................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 18 8860

This annex lists the patent family members relating to the patent documents cited in the above-mentioned European search report.
The members are as contained in the European Patent Office EDP file on
The European Patent Office is in no way liable for these particulars which are merely given for the purpose of information.

27-09-2024

| Patent document cited in search report | Publication date | Patent family member(s) | Publication date |
|---|---|---|---|
| US 2012158299 A1 | 21-06-2012 | US 2012158299 A1 | 21-06-2012 |
| | | US 2015285651 A1 | 08-10-2015 |
| | | WO 2012054533 A1 | 26-04-2012 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020024751 A
- JP 2020522064 A
- US 20160335593
- US 20140358703 A